Europäisches Patentamt

European Patent Office

Office européen des brevets

(19)

(11) Veröffentlichungsnummer: **0 220 734**
**A2**

## (12) EUROPÄISCHE PATENTANMELDUNG

(21) Anmeldenummer: 86115065.4

(51) Int. Cl.4: **A61G 5/00**

(22) Anmeldetag: 30.10.86

(30) Priorität: 30.10.85 DE 3538535

(43) Veröffentlichungstag der Anmeldung:
06.05.87 Patentblatt 87/19

(84) Benannte Vertragsstaaten:
AT BE CH DE FR GB LI NL

(71) Anmelder: SANITÄTSHAUS HEINRICH
OESTERREICH GMBH
Vor dem Steintor 37
D-2800 Bremen 1(DE)

(72) Erfinder: Zach, Wolfgang
Robbenplate 23
D-2800 Bremen 66(DE)
Erfinder: Giesau, Alfred
Eduard-Mörike-Strasse 8
D-2805 Stuhr 4(DE)

(74) Vertreter: Eisenführ & Speiser
Martinistrasse 24
D-2800 Bremen 1(DE)

(54) Bremse für Laufräder von Rollstühlen.

(57) Es wird eine Bremse für Laufräder von Rollstühlen angegeben, die mittels eines am Rollstuhl befestigbaren Bedienungsorgans bedienbar sind. Die Feststellbremse enthält eine mit der Nabenhülse des Laufrades umlaufende Umfangsverzahnung, eine schwenkbar befestigbare erste Sperrklinke, deren federbelasteter Sperrnocken bei Eingriff in die Umfangsverzahnung die Vorwärtsdrehung der Nabenhülse sperrt, eine am Rollstuhl - schwenkbar befestigbare zweite Sperrklinke, deren federbelasteter Sperrnocken bei Eingriff in die Umfangsverzahnung die Rückwärtsdrehung der Nabenhülse sperrt. Das Bedienungsorgan klinkt die Sperrklinken in einer ersten Stellung in die Umfangsverzahnung ein und in einer zweiten Stellung aus der Umfangsverzahnung aus.

Fig.1

## Bremse für Laufräder von Rollstühlen

Die Erfindung betrifft eine Bremse für Laufräder von Rollstühlen, mit einem am Rollstuhl - schwenkbar befestigten Bedienungsorgan.

Eine derartige Bremse für die Laufräder von Rollstühlen ist bekannt und besitzt einen mit dem Bedienungsorgan zusammenwirkenden Kniehebel, welcher in der Eingriffsstellung auf die Luftbereifung drückt, um das Laufrad durch Reibschluß festzuhalten. Nachteilig bei dieser bekannten Konstruktion ist es dabei, dass die Bremswirkung vom Luftdruck abhängig ist; bei höherem Reifendruck ist die Bremse wirksam, bei geringerem Reifendruck wirkt die Bremse dagegen nicht ausreichend.

Aufgabe der Erfindung ist es demgegenüber, eine Bremse der eingangs genannten Art derart weiterzubilden, dass eine zuverlässige Bremswirkung bei stillstehendem Rollstuhl unabhängig vom Reifendruck der Laufräder zu verwirklichen ist.

Diese Aufgabe wird erfindungsgemäss gelöst durch eine mit der Nabenhülse des Laufrades umlaufende Umfangsverzahnung, eine schwenkbar befestigbare erste Sperrklinke, deren federbelasteter Sperrnocken bei Eingriff in die Umfangsverzahnung die Vorwärtsdrehung der Nabenhülse sperrt, eine am Rollstuhl schwenkbar befestigbare zweite Sperrklinke, deren federbelasteter Sperrnocken bei Eingriff in die Umfangsverzahnung die Rückwärtsdrehung der Nabenhülse sperrt, wobei das Bedienungsorgan die Sperrklinken in einer ersten Stellung in die Umfangsverzahnung einklinkt und in einer zweiten Stellung aus der Umfangsverzahnung ausklinkt.

Die Vorteile der Erfindung liegen insbesondere darin, dass zwei gegenläufig sperrende Sperrklinken mit einer Umfangsverzahnung federbelastet zusammenwirken und in einer ersten Stellung des Bedienungsorgans zur federbelasteten Einklinkung in die Umfangsverzahnung freigegeben werden. Da die Sperrklinken dann unter ihrer Federlast in die Ausnehmungen der Umfangsverzahnung einfallen, ist keine permanente Kraftaufbringung durch den Benutzer notwendig, um den gebremsten Zustand aufrechtzuerhalten. Wird dagegen das Bedienungsorgan in eine zweite Stellung bewegt, in welcher der Benutzer das Bedienungsorgan dann ebenfalls wieder loslassen kann, so werden dadurch die Sperrklinken ausgeklinkt und vom Bedienungsorgan in dieser Stellung gehalten, so dass sich dann das Laufrad frei drehen kann.

Gemäss einer bevorzugten Ausführungsform der Erfindung ist die Schwenkachse der ersten Sperrklinke in Vorwärtsdrehrichtung der Nabenhülse gesehen vor der Schwenkachse des Bedienungsorgans angeordnet. Der Sperrnocken der ersten Sperrklinke ragt vor ihrer Schwenkachse spitzwinklig in die Ausnehmungen der Umfangsverzahnung und wird bei Rückwärtsdrehung dann von den Umfangszähnen automatisch aus den Ausnehmungen ausgeklinkt. Die Schwenkachse der zweiten Sperrklinke ist in Vorwärtsdrehrichtung der Nabenhülse gesehen hinter der Schwenkachse des Bedienungsorgans angeordnet. Der Sperrnocken der zweiten Sperrklinke liegt hinter ihrer Schwenkachse und greift in die Umfangsverzahnung so ein, dass der Sperrnocken bei Vorwärtsdrehung aus der Umfangsverzahnung herausgedrückt wird, während bei einer Rückwärtsdrehung der Sperrnocken der zweiten Sperrklinke in die nächste Ausnehmung der Umfangsverzahnung einklinkt.

Durch diese Anordnung und Ausgestaltung der Sperrklinken ist es möglich, in einer Zwischenstellung des Bedienungsorgans eine automatische Rücklaufsperre zu verwirklichen. In dieser Zwischenstellung ist die erste Sperrklinke - schon zuverlässig ausgeklinkt, während die zweite Sperrklinke sich -unter Federlast - noch in dem einklinkbaren Zustand befindet und sich bei einer Rückwärtsdrehung der Nabenhülse auch sperrend einklinken kann, um dadurch eine weitere Rückwärtsdrehung zu verhindern. Bei erneut einsetzender Vorwärtsdrehung läuft dann die Nabenhülse wieder frei, da die zweite Sperrklinke aufgrund der besonderen erfindungsgemässen Ausformung ihres Sperrnockens sowie der Umfangsverzahnung in Vorwärtsdrehrichtung aus der Umfangsverzahnung herausgedrückt wird und freiläuft. Die auf diese Weise mit der erfindungsgemässen Feststellbremse zusätzlich verwirklichte automatische Rücklaufsperre stellt einen entscheidenden Vorteil der Erfindung dar, weil dadurch ein unerwünschtes Zurückrollen von Rollstühlen bei einer ansteigenden Vorwärtsbewegung zuverlässig verhindert wird, ohne dass der Benutzer einen Bremsvorgang einleiten müsste.

Gemäss einer besonders bevorzugten Ausführungsform der Erfindung besitzen die Sperrklinken zu ihrer Bewegungssteuerung entsprechende Steuernocken an ihren einander benachbarten Enden, welche von einer Nockenkurve des Bedienungsorgans gesteuert werden. Ein erster Abschnitt der Nockenkurve kommt zur Wirkung mit den Steuernocken, wenn das Bedienungsorgan sich in der ersten Stellung bzw. im ersten Stellungsbereich befindet und ermöglicht das Einklinken der Sperrklinken unter ihrer Federkraft. Ein zweiter Abschnitt der Nockenkurve kommt in der sich anschliessenden Zwischenstellung zur Einwirkung auf den Steuernocken der ersten Sperrklinke und drückt diese aus der Einklinkstellung heraus, während die zweite Sperrklinke noch in dem einklinkbaren Zustand ist, wodurch die automatische Rücklaufsperre verwirklichbar ist. Wird das Bedienungsorgan dann in die zweite Stellung überführt, so drückt der zweite Abschnitt der Nockenkurve auch die zweite Sperrklinke in die Ausklinkstellung. Die Umfangsverzahnung und damit die Nabenhülse des Laufrades sind dann in beiden Richtungen frei drehbar. Auf diese Weise ist die Steuerung der Sperrklinken einfach verwirklichbar.

Besonders bevorzugt besitzt die zweite Sperrklinke etwa radial über dem Sperrnocken einen gegen das Bedienungsorgan ragenden Ansatz, dessen Länge so bemessen ist, dass er den Übergang des Bedienungsorgans aus der Zwischenstellung in die erste Stellung solange verhindert, bis die zweite Sperrklinke -in der Zwischenstellung des Bedienungsorgans -aufgrund einer vorhandenen Vorwärtsdrehung ausgeklinkt ist.

Die erste Sperrklinke und die zweite Sperrklinke können gegeneinander in Achsrichtung der Nabenhülse versetzt sein, und die Umfangsverzahnung erstreckt sich dann entweder über eine ausreichende axiale Breite, so dass beide Sperrklinken mit dieser Umfangsverzahnung zusammenwirken können; alternativ lässt sich auch die Umfangsverzahnung in zwei axial entsprechend versetzte Zahnkränze aufteilen, wobei dann ein Zahnkranz mit der ersten Sperrklinke, und der zweite Zahnkranz mit der zweiten Sperrklinke zusammenwirkt.

Gemäss einer besonders bevorzugten Ausführungsform der Erfindung ist die Bremse mit einer Reibschlussbremse versehen, die mindestens ein gegen die Nabenhülse wirkendes Bremselement und einen das Bremselement aus einer Aussereingriffsstellung in eine Bremsstellung setzenden Auslöser enthält. Die Reibschlussbremse lässt sich während der Fahrt des Rollstuhles betätigen und wirkt gegen eine Rückstellfeder, welche das Bremselement wieder in die Aussereingriffsstellung zurücksetzt, wenn der Benutzer die Betätigung der Reibschlussbremse beendet.

Bevorzugt wird der Auslöser der Reibschlussbremse von einem dritten Abschnitt der Nockenkurve betätigt, die an dem Bedienungsorgan angeordnet ist. Der dritte Abschnitt der Nockenkurve kann entweder integral an dem Bedienungsorgan angeformt oder als separate Nockenscheibe am Bedienungsorgan befestigt sein. Der dritte Abschnitt der Nockenkurve betätigt den Auslöser der Reibschlussbremse in einer dritten Stellung des Bedienungsorgans, die bevorzugt von der zweiten Stellung in entgegengesetzter Richtung zur ersten Stellung liegt und nur gegen die Wirkung einer Rückstellfeder eingelegt werden kann.

Als Auslöser für die Reibschlussbremse lässt sich alternativ ein Bowdenzug vorsehen, dessen Bedienungsgriff entweder am Bedienungsorgan für die Sperrklinken, oder separat von diesem Bedienungsorgan am Rahmen des Rollstuhls befestigt sein kann.

Als Reibschlussbremse eignet sich sowohl eine Druckbremse, die einen von aussen auf die Nabenhülse wirkenden Bremsbacken besitzt; alternativ lassen sich auch Scheibenbremsen einsetzen.

Gemäss einer besonders bevorzugten Ausführungsform der Erfindung ist die Reibschlussbremse in die Nabenhülse eingebaut und als Trommelbremse ausgebildet, die zwei an einer rahmenfesten Achse angelenkt, federbelastete Bremselemente besitzt. Der Auslöser der Trommelbremse ist -in an sich bekannter Weise -als Schwenkhebel ausgebildet, der an einer rahmenfesten Achse zwischen den freien Enden der Bremselemente angelenkt ist und an dieser Stelle als Spreizexzenter wirkt, während das freie Ende des Auslösers von der Nockenkurve des Bedienungsorgans oder dem Bowdenzug betätigt werden kann.

Diese Ausführungsform vereinigt in einfacher Bauweise sowohl die Feststellbremse (erste Sperrklinke), eine Rücklaufsperre (zweite Sperrklinke) und eine Fahrtbremse (Trommelbremse), die allen Bedürfnissen der behinderten Rollstuhlbenutzer gerecht wird und sichere Festbremsen in der ersten Stellung des Bedienungsorgans, das Einlegen einer Rücklaufstellung in der Zwischenstellung des Bedienungsorgans, eine ungebremste Bewegung in der zweiten Stellung des Bedienungsorgans und ausserdem noch das Abbremsen des bewegten Fahrzeuges beim Betätigen der Reibschlussbremse ermöglicht.

Vorteilhafte Weiterbildungen der Erfindung sind durch die Merkmale der Unteransprüche gekennzeichnet.

Im folgenden werden Ausführungsbeispiele der Erfindung anhand der Zeichnung näher erläutert.

Es zeigen:

Fig. 1 eine Frontansicht der Bremse, bei der das Bedienungsorgan in der zweiten Stellung liegt;

Fig. 2 eine Frontansicht der Bremse, bei der das Bedienungsorgan in der Zwischenstellung liegt;

Fig. 3 eine Frontansicht der Bremse, bei der das Bedienungsorgan in der ersten Stellung liegt;

Fig. 4 die zweite Sperrklinke in vergrösserter Darstellung;

Fig. 5 eine Ausführungsform der Bremse mit einer eingebauten Reibschlussbremse; und

Fig. 6 eine weitere Ausführungsform der Bremse mit eingebauter Reibschlussbremse.

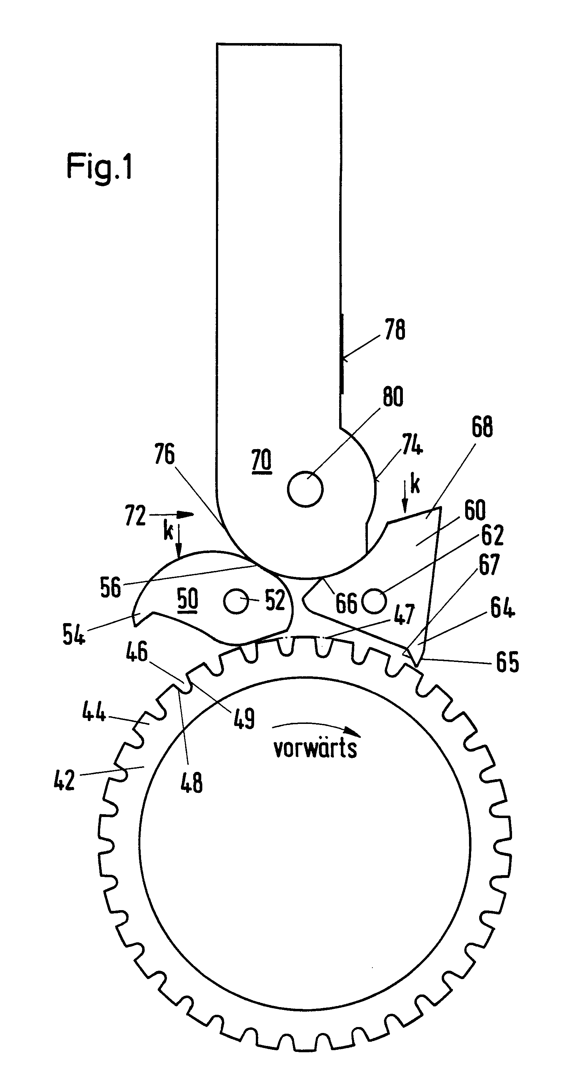

Die Fig. 1 bis 3 zeigen eine Frontansicht der Bremse in der zweiten Stellung (Ausgangsstellung), der Zwischenstellung und der ersten Stellung -(Einklinkstellung). Die Bremse besitzt ein Bedienungsorgan 70, welches zum Beispiel als Bedienungshebel ausgebildet ist und um eine Schwenkachse 80 schwenkbar gelagert ist, die am Rahmen oder einem rahmenfesten Teil eines Rollstuhls sitzt. An der Nabenhülse jedes Laufrades des Rollstuhls ist freiliegend eine Umfangsverzahnung 42 befestigt, die z.B. an einem über die Radspeichen hinausragenden Ende jeder Nabenhülse angebracht sein kann. Die Umfangsverzahnung 42 besitzt Zähne 44 und Ausnehmungen 46. Die Ausnehmungen 46 verbreitern sich zum Aussenumfang hin, die Flanken 48, 49 der Zähne laufen nach aussen spitzwinklig voneinander weg und sind aussen auf einen vorgegebenen Aussenumfang abgeschliffen.

Zwischen der Umfangsverzahnung 42 und dem Bedienungsorgan 70 sind eine erste und eine zweite Sperrklinke 50, 60 um Schwenkachsen 52, 62 schwenkbar am Rahmen oder einem rahmenfesten Teil des Rollstuhls angeordnet. Die erste Sperrklinke 50 ist auf einer rahmenfesten Schwenkachse 52 schwenkbar gelagert, die in Vorwärtsdrehrichtung der Nabenhülse gesehen vor der Schwenkachse 80 des Bedienungsorgans 70 liegt. Der Sperrnocken 54 der ersten Sperrklinke 50 liegt vor ihrer Schwenkachse 52 und ragt spitzwinklig in die Ausnehmungen 46 der Umfangsverzahnung 42 hinein und sperrt bei ihrem Eingriff in die Umfangsverzahnung die Vorwärtsdrehung der Nabenhülse während sie bei einer Rückwärtsdrehung der Nabenhülse -aufgrund der Form ihres Sperrnockens 54 -von der Umfangsverzahnung 42 auswärtsgedrückt wird und freiläuft.

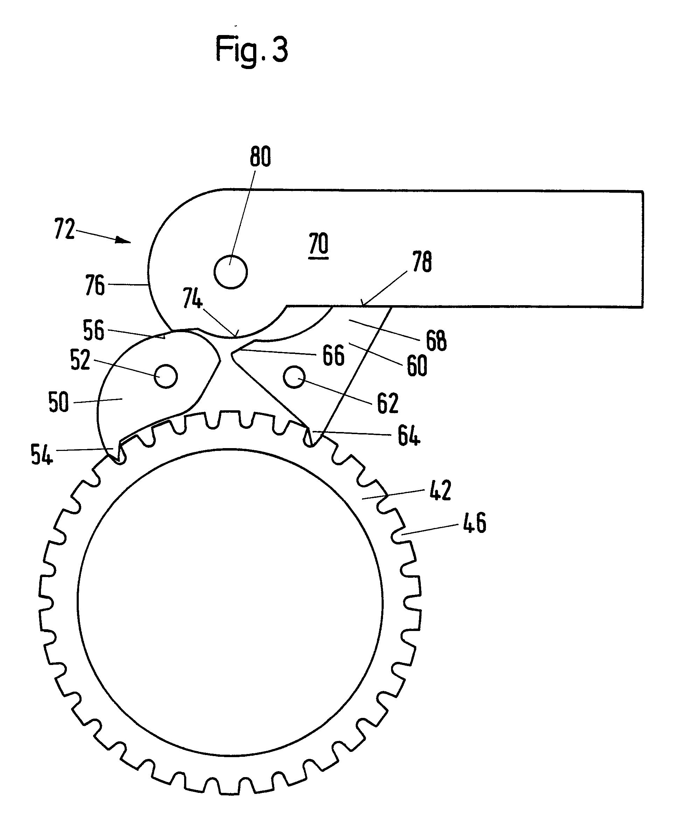

Die zweite Sperrklinke 60 ist -in Vorwärtsdrehrichtung der Nabenhülse gesehen - hinter der Schwenkachse 80 des Bedienungsorgans 70 angeordnet und lagert auf einer rahmenfesten Schwenkachse 62. Der Sperrnocken 64 der zweiten Sperrklinke 60 liegt -wiederum in Vorwärtsdrehrichtung der Nabenhülse gesehen - hinter ihrer Schwenkachse 62 und ragt in die Ausnehmungen 46 der Umfangsverzahnung 42 im wesentlichen radial hinein und verjüngt sich dabei nach aussen hin. Die Formanpassung der Ausnehmungen 46 und des Sperrnockens 64 der zweiten Sperrklinke 60 und die Lage des Sperrnockens 64 an der zweiten Sperrkinke 60 sind dabei so gewählt, dass die zweite Sperrklinke 60 -unter einer Federvorspannung -in die Ausnehmungen 46 der Umfangsverzahnung 42 bei einer Rückwärtsdrehung der Nabenhülse einklinken, wenn die Sperrklinke hier nicht durch das Bedienungsorgan 70 daran gehindert wird, wie nachstehend noch erläutert werden wird. Bei einer Vorwärtsdrehung der Nabenhülse und der Umfangsverzahnung 42 wird dagegen die zweite Sperrklinke 60 aus der Umfangsverzahnung 42 - gegen die Federbelastung K -zwangsweise herausgedrückt, wenn die zweite Sperrklinke 60 durch das Bedienungsorgan 70 hieran nicht gehindert wird, wie in Verbindung mit Fig. 3 noch erläutert wird.

Die erste Sperrklinke 50 besitzt -in Vorwärtsdrehrichtung gesehen -hinter ihrer Schwenkachse 52 einen Steuernocken 56. Die zweite Sperrklinke 60 besitzt - in Vorwärtsdrehrichtung gesehen -vor ihrer Schwenkachse 62 einen Steuernocken 66, der in vorgegebenem geringem Abstand vom Steuernocken 56 liegt. Die Steuernocken 56, 66 der beiden Sperrklinken 50, 60 wirken mit einer Nockenkurve 72 zusammen, die am angelenkten Ende des Bedienungsorgans 70 ausgebildet ist. Die Nockenkurve 72 besitzt einen ersten Abschnitt 74 mit einem relativ geringen Abstand oder Radius von der Schwenkachse 80, und einen daran anschliessenden zweiten Abschnitt 76 mit einem grösseren Abstand oder Radius von der Schwenkachse 80.

Wenn das Bedienungsorgan 70 sich in seiner zweiten Stellung -oder im zweiten Stellungsbereich -befindet, wie in Fig. 1 dargestellt ist, so wirkt der zweite Abschnitt 76 der Nockenkurve 72 auf die Steuernocken 56, 66 der beiden Sperrklinken 50, 60 und drückt diese gegen die Umfangsverzahnung 42, wodurch die Sperrnocken 54, 64 -gegen die Federbelastung K -aus der Umfangsverzahnung ausgeklinkt sind, so dass in dieser Stellung der Freilauf des Laufrades in beiden Drehrichtungen möglich ist.

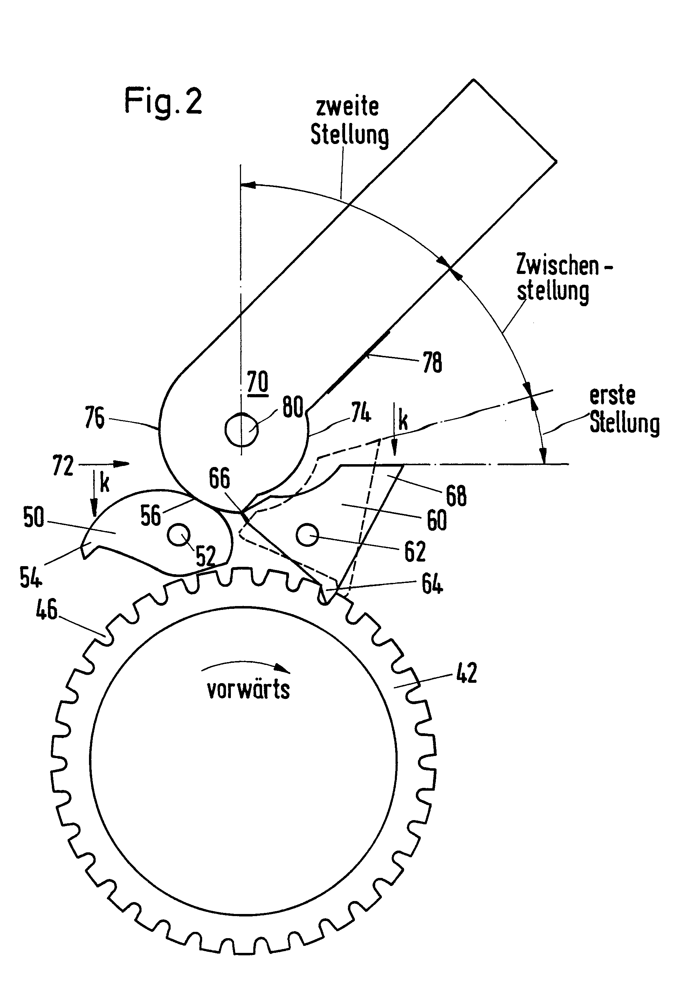

Wird dagegen das Bedienungsorgan 70 in die Zwischenstellung gedreht, vgl. Fig. 2, so wirkt der Steuernocken 56 der ersten Sperrklinke 50 noch mit dem zweiten Abschnitt 76 der Nockenkurve 72 zusammen und bleibt damit ausgeklinkt. Der Steuernocken 66 der zweiten Sperrklinke 60 wirkt dagegen mit dem ersten Abschnitt 74 der Nockenkurve 72 zusammen, die gegenüber dem ersten Abschnitt 76 soweit ausgenommen ist, dass der Sperrnocken 64 unter der Federbelastung K in die Ausnehmungen 46 der Umfangsverzahnung 42 einfallen kann. Aufgrund der besonderen Ausgestaltung der Ausnehmungen 46 und des Sperrnockens 64 wird der Sperrnocken 64 jedoch bei einer Vorwärtsdrehung von den Zähnen 44 der Umfangsverzahnung 42 nach aussen gedrückt und bleibt daher -bei einer Vorwärtsdrehung der Nabenhülse - ausgeklinkt. Wird dagegen die Nabenhülse/die Umfangsverzahnung in Rückwärtsdrehrichtung bewegt, so fällt der Sperrnocken 64 in eine Ausnehmung 46 ein und sperrt die weitere Rückwärtsdrehung. In dieser Zwischenstellung des Bedienungsorgans 70 wirkt daher die Feststellbremse als automatische Rücklaufsperre, die eine Rückwärtsdrehung des Laufrades selbsttätig verhindert.

Wie den Fig. 1 bis 3 entnehmbar ist, besitzt die zweite Sperrklinke 60 in Vorwärtsdrehrichtung gesehen hinter ihrer Schwenkachse 62 -etwa über dem Sperrnocken 64 liegend -einen Ansatz 68, der gegen eine Anschlagfläche 78 des Bedienungsorgans 70 gerichtet ist und mit dieser zusammenwirkt. Die Länge des Ansatzes 68 ist so bemessen, dass der Ansatz 68 das Bedienungsorgan 70 in der Zwischenstellung hält, in welcher die erste Sperrklinke durch den zweiten Abschnitt 76 ausgeklinkt ist, wenn die zweite Sperrklinke 60 aufgrund einer Vorwärtsdrehung der Nabenhülse/der Umfangsverzahnung 42 ebenfalls nach aussen gedrückt und damit ausgeklinkt ist (gestrichelt dargestellt in Fig.2). Es ist damit sichergestellt, dass bei Vorhandensein einer Vorwärtsdrehung der Nabenhülse das Erreichen der ersten Stellung des Bedienungsorgans 70, d.h. die Feststellposition zuverlässig verhindert wird. Es wird somit verhindert, dass aufgrund einer Fehlbedienung der Rollstuhl-Benutzer aus einer rascheren Vorwärtsbewegung die Feststellbremse aktivieren kann, was zu einem ruckartigen Stillstand und damit zur Beschädigung des Rollstuhls und zu Verletzungen des Benutzers führen könnte.

Erst wenn eine Vorwärtsdrehung der Nabenhülse/der Umfangsverzahnung 42 nahezu bzw. vollständig beendet ist, lässt sich die zweite Sperrklinke in die Umfangsverzahnung 42 einlegen, und erst dann gibt der Ansatz 68 den Weg für das Bedienungsorgan 70 frei, damit dieses in die erste Stellung gelegt werden kann (vgl. Fig. 3), in welcher auch die erste Sperrklinke 50 einklinkt. In der ersten Stellung liegt die Anschlagfläche 78 des Bedienungsorgans 70 auf dem Ansatz 68, und das Bedienungsorgan 70 dient dazu, die zweite Sperrklinke 60 in eine Ausnehmung der Umfangsverzahnung 42 einzudrücken und dort zu verriegeln.

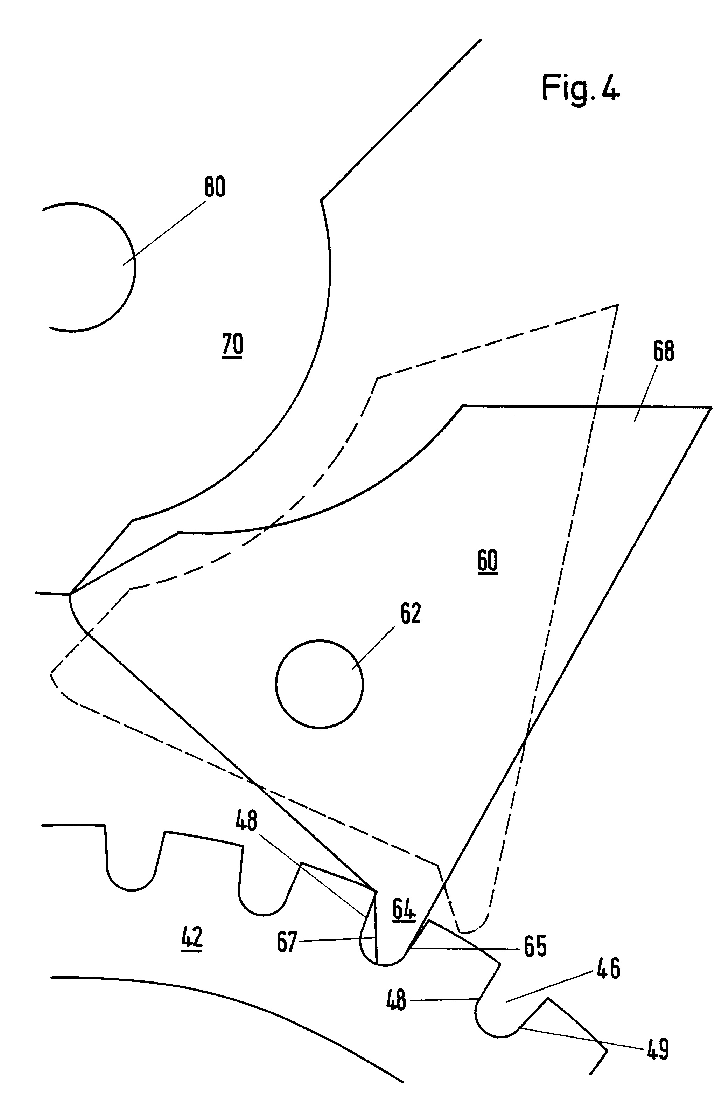

Fig. 4 zeigt eine vergrösserte Darstellung der zweiten Sperrklinke 60, die um ihre Schwenkachse 62 schwenkbar z.B. am Rahmen des Rollstuhls befestigt ist. Die zweite Sperrklinke 60 greift -in der Darstellung der Fig. 4 mit ihrem Sperrnocken 64 in eine Ausnehmung 46 der Umfangsverzahnung 42 ein. Die Zahnflanken 48 und 49 verlaufen gegenüber einem von der Nabenachse ausgehenden Strahl unter einem spitzen Winkel und verbreitern daher die Ausnehmung 46 nach aussen hin.

Der Sperrnocken 64 der zweiten Sperrklinke 60 besitzt eine -in Vorwärtsdrehrichtung gesehen - hinten liegende Rückflanke 65 und eine -in Vorwärtsdrehrichtung gesehen -vorne liegende Vorderflanke 67. Die Vorderflanke 67 ist in der dargestellten Ausführungsform als Geradenabschnitt ausgebildet, der gegenüber der Zahnflanke 48 unter einem spitzen Winkel verläuft. Alternativ ist eine andere Form der Zahnflanken 48 und 49 sowie der Flanken 65 und 67 des Sperrnockens 64 möglich, solange die Ausformung der Flanken sicherstellt, dass die vordere Zahnflanke 48 und die Vorderflanke 67 des Sperrnockens 64 bei einer Vorwärtsdrehung eine Relativbewegung zwischen sich ausführen können, bei welcher der Sperrnocken 64 aus den Ausnehmungen 46 herausgedrückt wird und dadurch ausklinkt bzw. in einer ausgeklinkten Stellung verbleibt, in welcher der obere Ansatz 68 der Sperrklinke 60 die Abwärtsbewegung des Bedienungsorgans 70 in die erste Stellung verhindert.

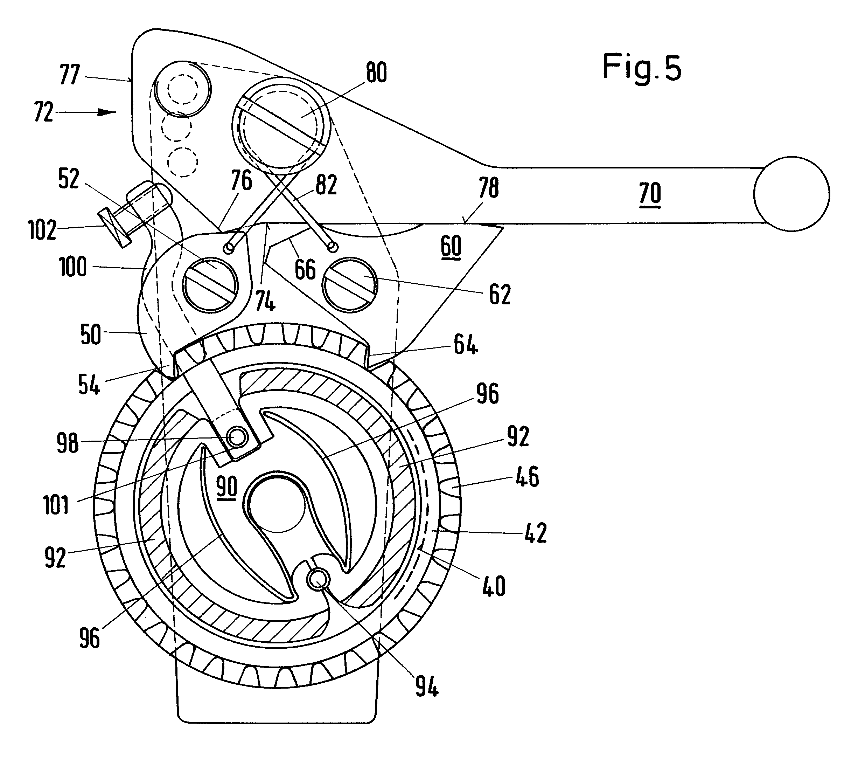

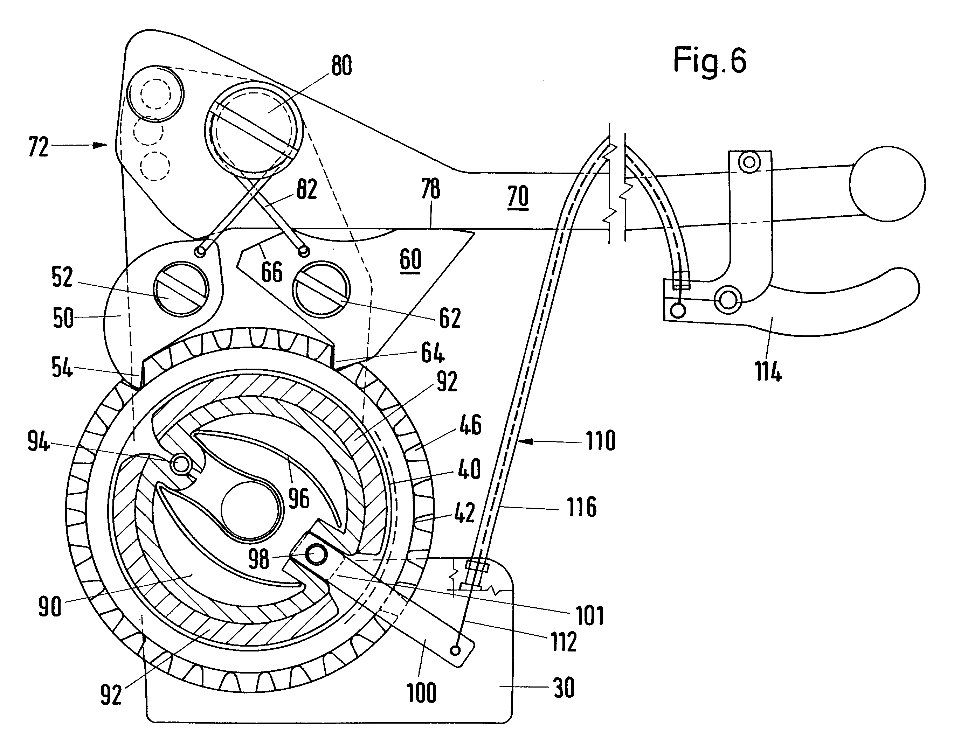

In den Fig. 5 und 6 sind zwei Ausführungsformen der Bremse gemäss den Fig. 1 bis 4 dargestellt, die zusätzlich zu der Umfangsverzahnung 42, der ersten und zweiten Sperrklinke 50, 60 und dem Bedienungsorgan 70 mit seiner Nockenkurve 72 noch eine Reibschlussbremse 90 in der Nabenhülse 40 aufweisen. Die Reibschlussbremse 90 ist als Trommelbremse ausgebildet. In der Nabenhülse 40 sind zwei Bremselemente 92 schwenkbar an einer rahmenfesten Achse 94 angelenkt und werden von einer Rückstellfeder 96 in geringem Abstand von der Innenfläche der Nabenhülse 40 in ihre Aussereingriffsstellung vorgespannt. Zwischen den freien Enden der Bremselemente 92 und der rahmenfesten Achse 94 gegenüber liegt eine weitere rahmenfeste Achse 98, an der ein Schwenkhebel angelenkt ist, welcher als Auslöser 100 für die Bremselemente 92 dient und zwischen den freien Enden der Bremselemente die Gestalt eines Spreizexzenters 101 besitzt. Der Auslöser 100 ist von der rahmenfesten Achse 90 nach aussen zu der Nockenkurve 72 des Bedienungsorgans 70 geführt und besitzt an seinem freien Ende eine Stellschraube 102, die mit einem dritten Abschnitt 77 der Nockenkurve 72 betätigt werden kann, wenn das Bedienungsorgan 70 aus der -dargestellten -ersten Stellung über die zweite Stellung in eine dritte Stellung gegen die Wirkung der Rückstellfeder 96 gehalten wird. In der dargestellten Ausführungsform wird in der dritten Stellung des Bedienungsorgans 70 der Auslöser 100 mittels des dritten Abschnitts 77 der Nockenkurve 72 im Gegenuhrzeigersinn geschwenkt, wodurch der Spreizexzenter 101 die freien Enden der Bremselemente 92 spreizt und dadurch die Bremselemente 92 auswärts gegen die Innenfläche der Nabenhülse 40 drückt. Sobald der Benutzer das Bedienungsorgans 70 wieder freilässt, verlässt das Bedienungsorgan 70 unter der Wirkung einer Rückstellfeder die dritte Stellung, in welcher die Trommelbremse 90 betätigt wird. Der dritte Abschnitt 77 der Nockenkurve 72 lässt sich alternativ auch mittels einer eigenen Nockenscheibe verwirklichen, die am Bedienungsorgan 70 befestigt ist.

Die in Fig. 6 dargestellte Bremse entspricht im wesentlichen der in Fig. 5 dargestellten Ausführungsform und besitzt ebenfalls eine in die Nabenhülse 40 integrierte Trommelbremse 90, die ebenfalls zwei schwenkbar angelenkte Bremselemente 92 besitzt, die mittels des Auslösers 100 und seines zwischen die freien Enden der Bremselemente 92 hineinrangenden Spreizexzenters 101 in die Bremsstellung bewegbar sind. Im Unterschied zu der Bremse gemäss Fig. 5 wird der Auslöser 100 in Fig. 6 mittels eines Bowdenzuges 110 betätigt, dessen Seil 112 einerseits am Auslöser 100, andererseits an einem Bedienungsgriff 114 befestigt ist, der am Bedienungsorgan 70 angeordnet ist. Alternativ kann der Bedienungsgriff 114 auch am Rahmen des Rollstuhls angeordnet sein, und alternativ lässt sich auch das Seil 112 des Bowdenzuges 110 dirkt am Bedienungsorgan 70 befestigen. Der Hüllschlauch 116 des Bowdenzuges ist einerseits am feststehenden Teil des Bedienungsgriffs 114, andererseits an einer rahmenfesten Grundplatte 30 befestigt.

In einer besonders bevorzugten Ausführungsform der Erfindung entfällt die erste Sperrklinke 50 und deren Funktion wird durch ein Feststellelement übernommen, welches die Trommelbremse 90 in der Bremsstellung festsetzt. Die Funktion der Feststellbremse wird bei dieser Ausführungsform der Erfindung von der dann feststellbaren Trommelbremse 90 übernommen. Die übrigen Merkmale der Erfindung, insbesondere die Anordnung und Gestalt der Klinke 60 sowie des Bedienungsorgans 70 und der Nockenkurve 72 sowie auch die Ausgestaltung der Trommelbremse 90 werden dadurch nicht verändert.

## Ansprüche

1. Bremse für Laufräder von Rollstühlen, mit einem am Rollstuhl schwenkbar befestigbaren Bedienungsorgan

gekennzeichnet durch

eine mit der Nabenhülse des Laufrades umlaufende Umfangsverzahnung (42),

eine schwenkbar befestigbare erste Sperrklinke - (50), deren federbelasteter Sperrnocken (54) bei Eingriff in die Umfangsverzahnung (42) die Vorwärtsdrehung der Nabenhülse sperrt,

eine am Rollstuhl schwenkbar befestigbare zweite Sperrklinke (60), deren federbelasteter Sperrnocken (64) bei Eingriff in die Umfangsverzahnung (42) die Rückwärtsdrehung der Nabenhülse sperrt, wobei das Bedienungsorgan (70) die Sperrklinken (50, 60) in einer ersten Stellung in die Umfangsverzahnung (42) einklinkt und in einer zweiten Stellung aus der Umfangsverzahnung (42) ausklinkt,

2. Bremse nach Anspruch 1, dadurch gekennzeichnet, dass die Schwenkachse (52) der ersten Sperrklinke (50) in Vorwärtsdrehrichtung der Nabenhülse gesehen vor der Schwenkachse (80) des Bedienungsorgans (70) sitzt, und dass der Sperrnocken (54) der ersten Sperrklinke (50) vor ihrer Schwenkachse (52) spitzwinklig in die Ausnehmungen (46) der Umfangsverzahnung (42) eingreift.

3. Bremse nach Anspruch 1 oder 2, dadurch gekennzeichnet, dass die Schwenkachse (62) der zweiten Sperrklinke (60) in Vorwärtsdrehrichtung der Nabenhülse gesehen hinter der Schwenkachse (80) des Bedienungsorgans (70) sitzt, und dass der Sperrnocken (64) der zweiten Sperrklinke (60) hinter ihrer Schwenkachse (62) bei Rückwärtsdrehung in die Umfangsverzahnung (42) einklinkt, und bei Vorwärtsdrehung freiläuft.

4. Bremse nach einem der vorstehenden Ansprüche, dadurch gekennzeichnet, dass die Ausnehmungen (46) der Umfangsverzahnung (42) sich radial nach aussen verbreitern.

5. Bremse nach Anspruch 4, dadurch gekennzeichnet, dass die beiden Flanken (48, 49) der Ausnehmungen (46) symmetrisch oder unsymmetrisch zueinander ausweiten.

6. Bremse nach einem der vorstehenden Ansprüche, dadurch gekennzeichnet, dass der Sperrnocken (64) der zweiten Sperrklinke (60) sich nach aussen hin verjüngt und im wesentlichen radial in die Ausnehmungen (46) der Umfangsverzahnung - (42) eingreift.

7. Bremse nach Anspruch 6, dadurch gekennzeichnet, dass die Flanken (65, 67) des Sperrnockens (64) unter Bildung eines spitzen Winkels oder abgerundet aufeinander zu verlaufen.

8. Bremse nach einem der vorstehenden Ansprüche, dadurch gekennzeichnet, dass der Sperrnocken (64) der zweiten Sperrklinke (60) derart auf die Ausnehmungen (46) angepasst ist, dass der Sperrnocken (64) bei Vorwärtsdrehung der Umfangsverzahnung ausser Eingriff ist und nur bei Rückwärtsdrehung oder näherungsweisem Stillstand in die Umfangsverzahnung (42) einklinkt.

9. Bremse nach einem der vorstehenden Ansprüche, dadurch gekennzeichnet, dass die erste Sperrklinke (50) in Vorwärtsdrehrichtung hinter ihrer Schwenkachse (52), und die zweite Sperrklinke (60) in Vorwärtsdrehrichtung vor ihrer Schwenkachse (62) je einen von der Umfangsverzahnung - (42) weggerichteten Steuernocken (56, 66) besitzt, welche mit einer Nockenkurve (72) am Bedienungsorgan (70) zusammenwirken.

10. Bremse nach Anspruch 9, dadurch gekennzeichnet, dass die Nockenkurve (72) um die Schwenkachse (80) des Bedienungsorgans (70) verläuft und einen ersten Abschnitt (74) enthält, der die Sperrklinken (50, 60) zur Einklinkung in die Umfangsverzahnung (42) unter Federlast freigibt, und einen zweiten Abschnitt (76) mit gegenüber dem ersten Abschnitt (74) vergrössertem Abstand von der Schwenkachse (80) enthält, der die Steuernocken (56, 66) der Sperrklinken (50, 60) gegen die Umfangsverzahnung (42) drückt und dadurch die Sperrklinken (50, 60) aus der Umfangsverzahnung herausschwenkend ausklinkt.

11. Bremse nach einem der vorstehenden Ansprüche, dadurch gekennzeichnet, dass das Bedienungsorgan (70) in einer Zwischenstellung zwischen der ersten und der zweiten Stellung die erste Sperrklinke (50) mittels des zweiten Abschnitts (76) der Nockenkurve (72) ausgeklinkt hält und die zweite Sperrklinke (60) in Eingriff mit dem ersten Abschnitt (74) der Nockenkurve (72) bringt und zum Einklinken in die Umfangsverzahnung - (42) freigibt.

12. Bremse nach einem der vorstehenden Ansprüche, dadurch gekennzeichnet, dass die zweite Sperrklinke (60) in Vorwärtsdrehrichtung gesehen hinter ihrer Schwenkachse (62) etwa über dem Sperrnocken (64) liegend einen Ansatz (68) enthält, der gegen eine Anschlagfläche (78) des Bedienungsorgans (70) wirkt und das Bedienungsorgan (70) aus der Zwischenstellung am Erreichen seiner ersten Stellung hindert, solange die zweite Sperrklinke (60) aufgrund einer vorhandenen Vorwärtsdrehung ausgeklinkt ist.

13. Bremse nach einem der vorstehenden Ansprüche, dadurch gekennzeichnet, dass die erste Sperrklinke (50) und die zweite Sperrklinke (60) gegeneinander in Achsrichtung der Nabenhülse versetzt sind, und dass die Umfangsverzahnung - (42) zwei axial entsprechend versetzte Zahnkränze besitzt.

14. Bremse nach einem der vorstehenden Ansprüche, gekennzeichnet durch eine Reibschlussbremse (90), die mindestens ein gegen die Nabenhülse (40) wirkendes Bremselement (92) und einen das Bremselement (92) aus einer Aussereingriffsstellung in die Bremsstellung setzenden Auslöser (100) enthält.

15. Bremse nach Anspruch 14, dadurch gekennzeichnet, dass der Auslöser (100) der Reibschlussbremse (90) von einem dritten Abschnitt /77) der Nockenkurve (72) betätigbar ist, die an dem Bedienungsorgan (70) sitzt.

16. Bremse nach Anspruch 14, dadurch gekennzeichnet, dass der dritte Abschnitt (77) der Nockenkurve (72) als separate Nockenscheibe ausgebildet und am Bedienungsorgan (70) befestigt ist.

17. Bremse nach Anspruch 15 oder 16, dadurch gekennzeichnet, dass der dritte Abschnitt - (77) der Nockenkurve /72) den Auslöser (100) der Reibschlussbremse (90) in einer dritten Stellung des Bedienungsorgans (70) betätigt, die von der zweiten Stellung entgegengesetzt zur ersten Stellung liegt.

18. Bremse nach Anspruch 14, dadurch gekennzeichnet, dass der Auslöser (100) der Reibschlussbremse (90) mittels eines Bowdenzuges - (110, 112) betätigbar ist, dessen Bedienungsgriff - (114) am Bedienungsorgan (70) befestigt ist.

19. Bremse nach Anspruch 18, dadurch gekennzeichnet, dass der Auslöser (100) der Reibschlussbremse (90) mittels eines Bowdenzuges - (110, 112) betätigbar ist, dessen Bedienungsgriff (114) vom Bedienungsorgan (70) getrennt am Rollstuhl angeordnet ist.

20. Bremse nach einem der Ansprüche 13 bis 19, dadurch gekennzeichnet, dass die Reibschlussbremse (90) in der Nabenhülse (40) als Trommelbremse ausgebildet ist, die zwei an einer rahmenfesten Achse (94) angelenkte unter der Wirkung einer Rückstellfeder (96) auswärts gegen die Nabenhülse (40) schwenkbare Bremselemente - (92) besitzt, und deren Auslöser (100) als Schwenkhebel ausgebildet ist und mit einem Spreizexzenter (101) zwischen den freien Enden der Bremselemente (92) angelenkt ist und an seinem freien Ende von dem dritten Abschnitt (77) der Nockenkurve (72) oder dem Seil (112) des Bowdenzuges (110) betätigbar ist.

21. Bremse nach einem der Ansprüche 14 bis 19, dadurch gekennzeichnet, dass die Reibschlussbremse eine an einer rahmenfesten Achse ausserhalb der Nabenhülse (40) angelenkte Bremsbacke besitzt und bei Betätigung des Auslösers unter der Wirkung einer Rückstellfeder von aussen gegen eine Bremsfläche an der Nabenhülse (40) und/oder der Umfangszahnung (42) pressbar ist.

22. Bremse für Laufräder von Rollstühlen, mit einem am Rollstuhl schwenkbar befestigbaren Bedienungsorgan,

gekennzeichnet durch

eine mit der Nabenhülse des Laufrades umlaufende Umfangsverzahnung (42),

eine am Rollstuhl schwenkbar befestigbare Sperrklinke (60), deren federbelasteter Sperrnocken (64) bei Eingriff in die Umfangsverzahnung (42) die Rückwärtsdrehung der Nabenhülse sperrt, wobei das Bedienungsorgan (70) die Sperrklinke (60) in einer ersten Stellung in die Umfangsverzahnung - (42) einklinkt und in einer zweiten Stellung aus der Umfangsverzahnung (42) ausklinkt,

und durch eine Reibschlussbremse (90) in der Nabenhülse (40), die mindestens ein gegen die Nabenhülse (40) wirkendes Bremselement (92) und einen das Bremselement (92) aus einer Aussereingriffsstellung in die Bremsstellung setzenden Auslöser (100) enthält, der mittels eines Abschnittes an der Nockenkurve (72) des Bedienungsorgans (70) gegen die Wirkung einer Rückstellfeder betätigbar ist und das Bremselement (92) in die Bremsstellung setzt, und dass ein Feststellorgan vorgesehen ist, welches das Bedienungsorgan in der die Reibschlussbremse (90) betätigenden Stellung lösbar festsetzt.

Fig.1

vorwärts

Fig.2

Fig. 3

0 220 734

Fig. 4

Fig.5

Fig.6

0 220 734